# EUROPEAN PATENT APPLICATION

(11) **EP 3 337 272 A1**
(43) Date of publication of application: **20.06.2018**
(21) Application number: 16835160.9
(22) Date of filing: 08.08.2016
(51) Int. Cl.: H04W 74/08, H04W 4/04, H04W 92/18

(54) **USER DEVICE AND SIGNAL TRANSMISSION METHOD**

(30) Priority: 13.08.2015 JP 2015159991
(71) Applicant: NTT DOCOMO, INC., Chiyoda-ku Tokyo 100-6150 (JP)
(72) Inventor: YASUKAWA, Shimpei, Tokyo 100-6150 (JP); HARADA, Hiroki, Tokyo 100-6150 (JP); NAGATA, Satoshi, Tokyo 100-6150 (JP); ZHAO, Qun, Beijing 100190 (CN)
(74) Representative: Hoffmann Eitle
(86) International application number: PCT/JP2016/073358
(87) International publication number: WO 2017/026463

(57) **Abstract**

A user device for a radio communication system supporting D2D communication. The user device includes a determiner that performs a carrier sense in a prespecified symbol in a physical channel used for the D2D communication to determine whether a D2D signal can be transmitted, and a transmitter that transmits the D2D signal to another user device different from the user device when the determiner determines that the D2D signal can be transmitted.

## Description

### TECHNICAL FIELD

The present invention relates to a user device and a signal transmission method.

### BACKGROUND ART

In Long Term Evolution (LTE) and successor systems (e.g., LTE Advanced (LTE-A), Future Radio Access (FRA), and 4G) to LTE, a Device to Device (D2D) technology where user terminals directly communicate with each other without the intervention of a radio base station is being considered (see, for example, Non-Patent Document 1).

D2D makes it possible to reduce the traffic between user devices and base stations and enables user devices to communicate with each other even when base stations become incapable of communication due to, for example, disasters.

D2D is roughly divided into D2D discovery for finding another user device that is capable of communication and D2D communication (which may also be referred to as "D2D direct communication" or "inter-terminal direct communication") for allowing terminals to directly communicate with each other. In the descriptions below, D2D communication and D2D discovery are simply referred to as "D2D" when it is not necessary to make a distinction between them. Also, signals transmitted and received in D2D are referred to as "D2D signals".

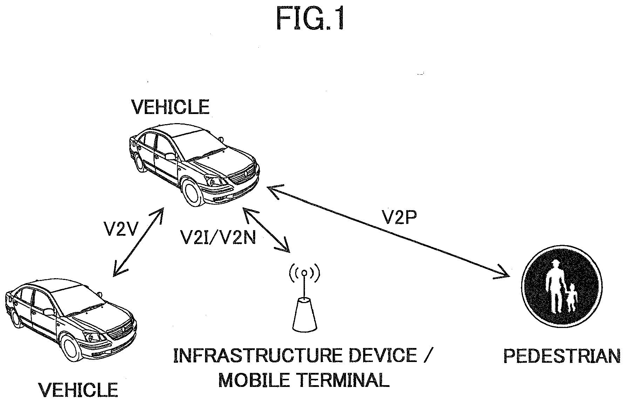

Also, in the 3rd Generation Partnership Project (3GPP), it is being considered to achieve V2X by expanding D2D functions. Here, V2X is a part of Intelligent Transport Systems (ITS) and as illustrated in FIG. 1, is a generic term for Vehicle to Vehicle (V2V) indicating communication between vehicles, Vehicle to Infrastructure (V2I) indicating communication between a vehicle and a road-side unit (RSU) installed on a roadside, Vehicle to Nomadic device (V2N) indicating communication between a vehicle and a mobile terminal of a driver), and Vehicle to Pedestrian (V2P) indicating communication between a vehicle and a mobile terminal of a pedestrian.

### [RELATED-ART DOCUMENT]

### [Non-Patent Document]

[Non-Patent Document 1] "Key drivers for LTE success: Services Evolution", September 2011, 3GPP, Internet URL: http://www.3gpp.org/ftp/Information/presentations/presen tations_2011/2011_09_LTE_Asia/2011_LTE-Asia_3GPP_Service_evolution.pdf

### DISCLOSURE OF INVENTION

### PROBLEMS TO BE SOLVED BY THE INVENTION

Requirements peculiar to V2X include, for example, support for high-speed movement (support for a relative speed of 280 km/h between vehicles), implementation of a synchronization method using a global positioning system (GPS), reduction of delay in important communications (e.g., communications for preventing accidents and traffic jams), measures for preventing interference to enable communication in an environment where a large number of vehicles exist, support for communication between RSUs that are expected to perform important communications in V2X, and measures for sharing frequencies with cellular communication systems, other operators, and other radio communication systems.

Listen Before Talk (LBT) is expected to be a promising function to be applied to D2D to meet these requirements. LBT is a mechanism that makes it possible to determine whether a communication channel is idle before transmitting a signal to the communication channel and thereby prevent collision of signals transmitted from multiple transmitter stations. Here, an LBT function being used in the current WiFi (registered trademark) is described.

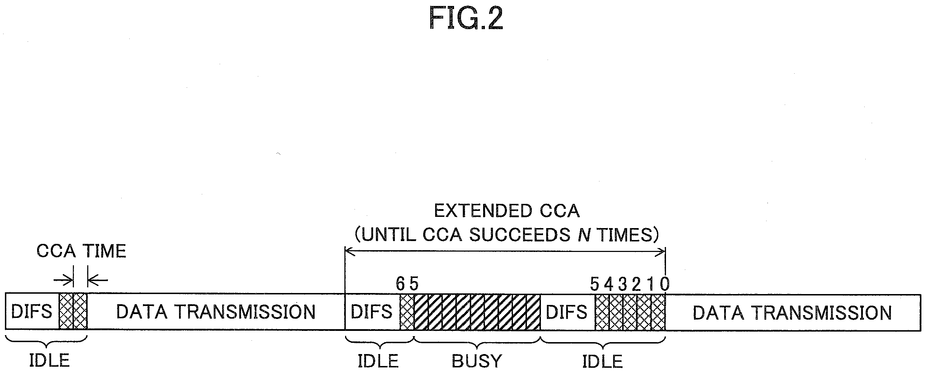

FIG. 2 is a drawing used to describe an LBT function being used in WiFi (registered trademark). Before transmitting data, a terminal confirms that a communication channel is continuously idle for the duration of a distributed inter frame space (DIFS, wait time) and a backoff time. The backoff time is obtained by multiplying a backoff value (counter value) randomly determined by the terminal itself by a clear channel assessment (CCA) slot time (CCA time in FIG. 2). The terminal compares received power with a predetermined threshold in each CCA slot time, determines that the communication channel is idle and decreases the counter value when the received power is less than or equal to the threshold, and starts data transmission at a timing when the counter value becomes zero. In the example of FIG. 2, the backoff value (counter value) is "6", and data transmission is started at a timing when the counter value is decreased to "0".

Applying LBT to D2D is expected to achieve some of the above-described requirements peculiar to V2X such as interference control in a case where frequencies are shared with other operators and other radio communication systems, multiplexing and interference suppression of communications performed between RSUs and vehicles, and autonomous QoS control (e.g., low-delay control) for important communications.

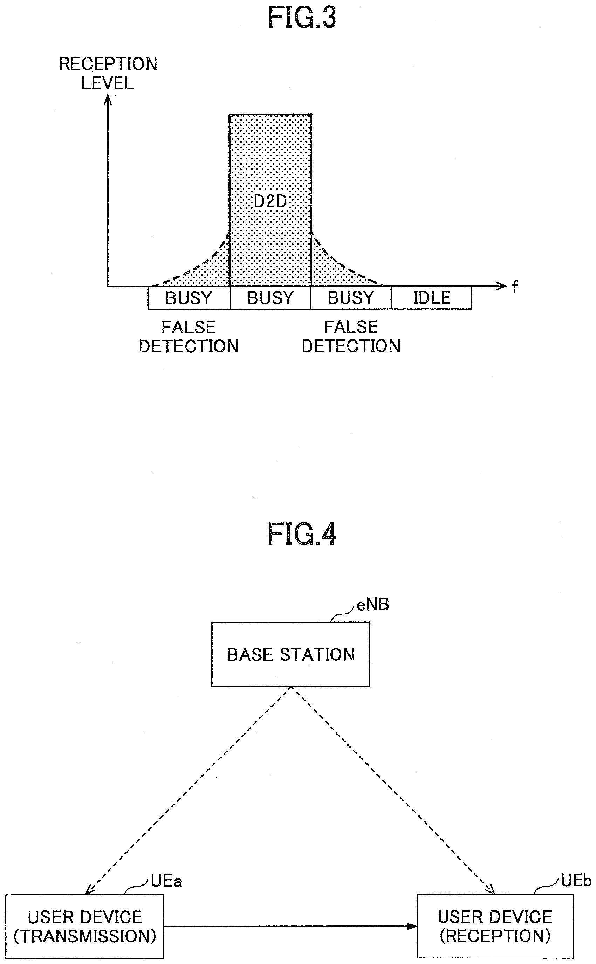

However, LBT in WiFi (registered trademark) is a technology that does not presume the use of frequency division multiplexing (FDM), and is based on an assumption that LBT is performed for all frequency carriers used for communication. On the other hand, D2D presumes the use of FDM. Therefore, when the mechanism of LBT in WiFi (registered trademark) is applied without change to D2D, particularly in a case where small packets are exchanged (i.e., where the amount of transmission data is small), the frequency use efficiency may be reduced due to the influence of in-band emission. More specifically, as illustrated by FIG. 3, when a D2D signal including a small packet is transmitted in a particular frequency carrier (a frequency carrier corresponding to a physical resource block (PRB)) among frequency carriers allocated for D2D communication, leak signals are generated in adjacent frequency carriers in addition to the particular frequency carrier, and it may be falsely detected that communication channels are being used (busy) even in the adjacent frequency carriers. As a result, the frequency use efficiency is reduced.

Also, because important communications that require low delay are performed in V2X, it is not desirable to perform LBT each time a D2D signal is transmitted. Further, because D2D is half-duplex communication where a transmitting user device and a receiving user device use the same frequency carrier and employs a mechanism (repetition transmission) for repeatedly transmitting the same D2D signal to reduce the influence of the limitation of the half-duplex communication, performing LBT for each repetition of transmission may increase the overhead.

One object of this disclosure is to solve or reduce the above-described problems, and to provide a technology that enables LBT in D2D communication.

### MEANS FOR SOLVING THE PROBLEMS

In an aspect of this disclosure, there is provided a user device for a radio communication system supporting D2D communication. The user device includes a determiner that performs a carrier sense in a prespecified symbol in a physical channel used for the D2D communication to determine whether a D2D signal can be transmitted, and a transmitter that transmits the D2D signal to another user device different from the user device when the determiner determines that the D2D signal can be transmitted.

### ADVANTAGEOUS EFFECT OF THE INVENTION

This disclosure provides a technology that enables LBT in D2D communication.

### BRIEF DESCRIPTION OF THE DRAWINGS

FIG. 1 is a drawing used to describe V2X;
FIG. 2 is a drawing used to describe LBT used in WiFi (registered trademark);
FIG. 3 is a drawing used to describe an influence of in-band emission;
FIG. 4 is a drawing illustrating an example of a configuration of a radio communication system according to an embodiment;
FIG. 5 is a drawing used to describe D2D communication;
FIG. 6 is a drawing illustrating a MAC PDU used in D2D communication;
FIG. 7 is a drawing illustrating a format of an SL-SCH subheader;
FIG. 8 is a drawing illustrating exemplary radio resources for which a carrier sense is performed;
FIG. 9 is a drawing used to describe a backoff time;
FIG. 10 is a drawing used to describe a method for performing an LBT process for each subband;
FIG. 11 is a drawing illustrating examples of carrier sense target resources;
FIG. 12 is a drawing illustrating examples of radio resources for which an LBT process is performed and radio resources for which no LBT process is performed;
FIG. 13 is a drawing used to describe a related-art method of allocating radio resources for PSCCH and PSSCH;
FIG. 14 is a drawing used to describe radio resource allocation methods that are adapted to take into account an LBT process;
FIG. 15 is a drawing illustrating exemplary transmission orders of MAC PDUs;
FIG. 16 is a drawing illustrating an example of a functional configuration of a user device according to an embodiment;
FIG. 17 is a drawing illustrating an example of a functional configuration of a base station according to an embodiment; and
FIG. 18 is a drawing illustrating an example of a hardware configuration of each of a base station and a user device according to an embodiment.

### DESCRIPTION OF EMBODIMENTS

Embodiments of the present invention are described below with reference to the accompanying drawings. Embodiments described below are examples, and the present invention is not limited to those embodiments. For example, although it is assumed that a radio communication system according to the embodiments conforms to LTE, the present invention is not limited to LTE and may also be applied to other types of systems. In the specification and the claims of the present application, "LTE" is used in a broad sense and may indicate not only a communication system corresponding to 3GPP release 8 or 9, but also a fifth-generation communication system corresponding to 3GPP release 10, 11, 12, 13, 14, or later.

### <OUTLINE>

As illustrated by FIG. 4, a radio communication system of an embodiment includes a base station eNB, a transmitting user device UEa that transmits a D2D signal, and a receiving user device UEb that receives the D2D signal. The base station eNB, for example, allocates a resource pool used for transmission and reception of D2D signals by using broadcast information (system information: SIB) of a macro cell or a radio resource control (RRC). In the descriptions below, the transmitting user device UEa and the receiving user device UEb may be collectively referred to as a "user device(s) UE".

In D2D communication, a part of uplink resources predefined as resources for uplink signal transmission from the user device UE to the base station eNB is used. Below, an outline of D2D signal transmission in LTE is described.

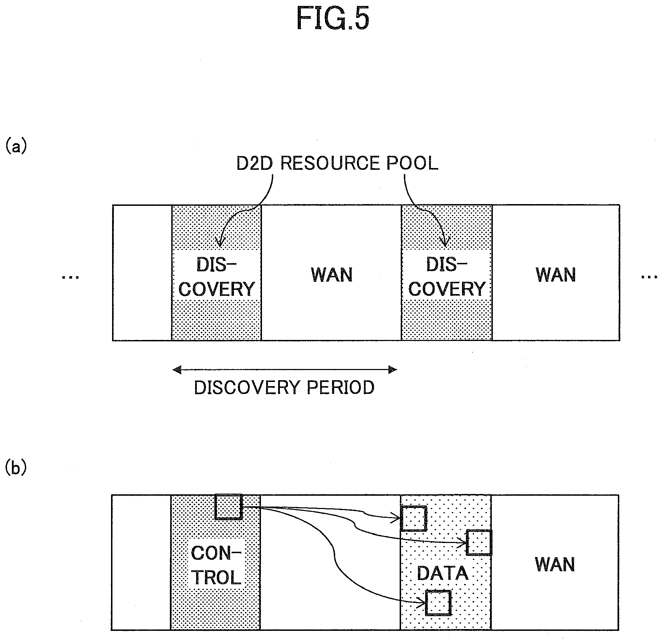

For "Discovery", as illustrated by FIG. 5 (a), a resource pool for a discovery message is reserved for each discovery period, and the user device UEa transmits the discovery message within the resource pool. More specifically, there are Type 1 and Type 2b. In Type 1, the user device UEa autonomously selects transmission resources from the resource pool. In Type 2b, resources are allocated semi-statically by upper layer signaling (e.g., an RRC signal).

Also for "Communication", control/data transmission resource pools are periodically reserved as illustrated by FIG. 5 (b). The transmitting user device UE reports sidelink control information (SCI) including data transmission resources to the receiving user device UEb by using resources selected from the control resource pool, and transmits data using the data transmission resources. More specifically, there are Mode 1 and Mode 2 for "Communication". In Mode 1, resources are dynamically allocated via a (E)PDCCH transmitted from the base station eNB to the user device UE. In Mode 2, the user device UEa autonomously selects transmission resources from the Control/Data resource pools. The resource pools are reported via SIB or defined in advance.

In LTE, a channel used for "Discovery" is referred to as a physical sidelink discovery channel (PSDCH), a channel for transmitting control information such as SCI in "Communication" is referred to as a physical sidelink control channel (PSCCH), and a channel for transmitting data is referred to as a physical sidelink shared channel (PSSCH).

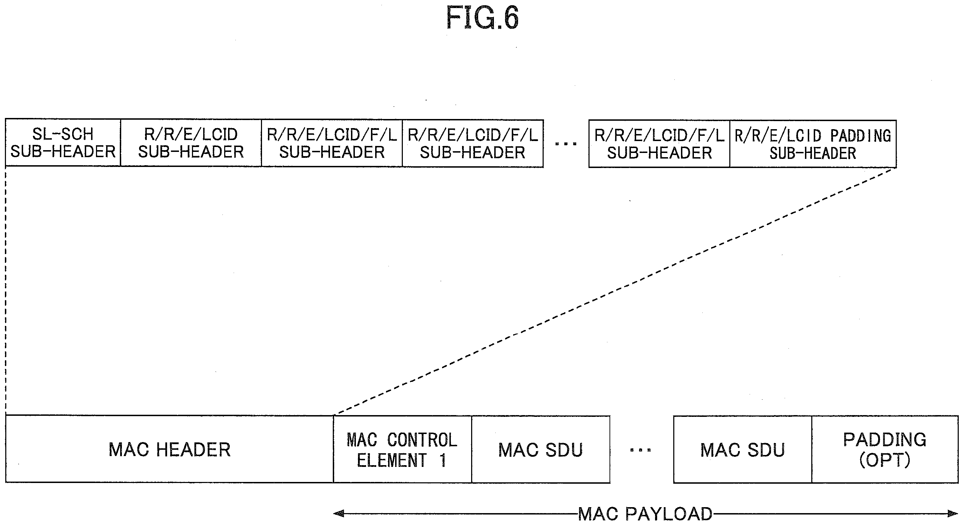

As illustrated by FIG. 6, a medium access control (MAC) protocol data unit (PDU) used for D2D communication includes at least a MAC header, a MAC control element, a MAC service data unit (PDU), and padding. The MAC PDU may also include other types of information. The MAC header includes one sidelink shared channel (SL-SCH) subheader and one or more MAC PDU subheaders.

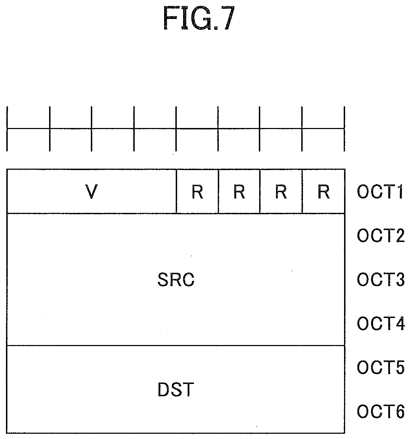

As illustrated by FIG. 7, the SL-SCH subheader includes a MAC PDU format version (V), source information (SRC), destination information (DST), and reserved bits (R). "V" is placed in the beginning of the SL-SCH subheader and indicates a MAC PDU format version used by the user device UE. The source information includes information on a sender. The source information may include an identifier of a ProSe UE ID. The destination information includes information on a destination. The destination information may include information on a ProSe Layer-2 Group ID of the destination.

In the present embodiment, the user device UE may be a vehicle, a mobile terminal of a driver, or a mobile terminal of a pedestrian that are defined in V2X. Also, unless otherwise mentioned, an RSU defined in V2X may be the user device UE or the base station eNB of the present embodiment. Next, processes performed by the radio communication system of the present embodiment are described.

### <PROCESSES>

### (1. LBT PROCESS)

First, an LBT process performed by the user device UE of the present embodiment is described. Before transmitting a D2D signal, the user device UE performs a carrier sense in a radio resource that is determined in advance between the user device UE and another user device UE. A carrier sense is a process for determining whether a frequency carrier to be used for signal transmission is unoccupied or occupied. More specifically, when the reception level of a received signal during an LBT period in a frequency carrier to be used for transmission of a D2D signal (i.e., subcarriers corresponding to a PRB for containing the D2D signal) is greater than a predetermined threshold, the user device UE determines that the frequency carrier is occupied (which may be hereafter referred to as a "busy state" or "busy"). On the other hand, when the reception level is less than the predetermined threshold, the user device UE determines that the frequency carrier is unoccupied (which may be hereafter referred to as an "idle state" or "idle").

### [1-1. CARRIER SENSE]

To perform LBT, a radio resource where a carrier sense is performed needs to be shared in advance between the transmitting user device UEa and the receiving user device UEb. In the present embodiment, the user device UE performs a carrier sense in a prespecified symbol in a physical channel used for D2D communication.

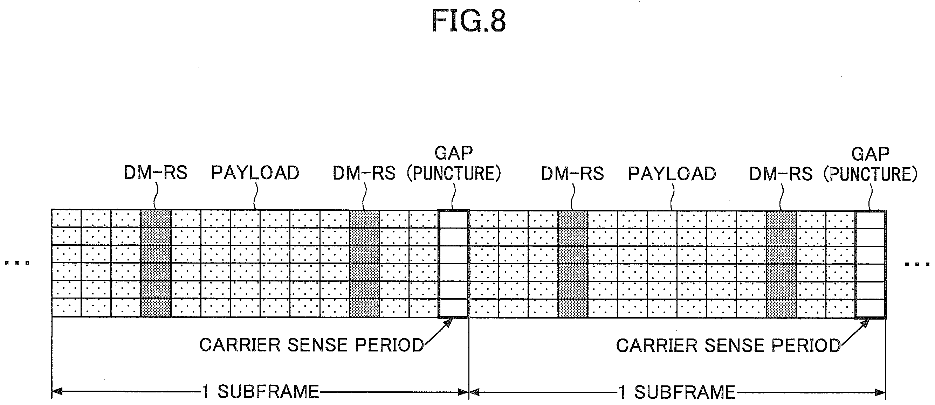

FIG. 8 is a drawing illustrating exemplary radio resources where a carrier sense is performed. In the subframe configuration of physical channels (e.g., PSDCH, PSCCH, PSSCH, and a physical sidelink broadcast channel (PSBCH)), the last symbol in each subframe is set as a gap period (where no signal is transmitted). Therefore, in the present embodiment, the transmitting user device UEa may be configured to perform a carrier sense in the gap period as illustrated in FIG. 8. In this case, the user device UE performing a carrier sense monitors the gap period. On the other hand, the user device UE transmitting data and not performing a carrier sense transmits the data without puncturing the gap period. The transmitting user device UEa transmitting a D2D signal transmits a demodulation reference signal (DM-RS) or any other D2D signal in a symbol (where a carrier sense is performed) to enable another user device UE performing an LBT process to detect a busy state.

Considering the applications of V2X, it is assumed that comparatively small packets are transmitted and received between user devices UE. Therefore, the carrier sense may be performed at shorter intervals.

For example, in the current D2D, a transport block (TB) is transmitted every one TTI (1 ms). In the present embodiment, a transport block (TB) may be transmitted every one slot (0.5 ms), and the user device UE may be configured to perform a carrier sense in the last symbol of each slot. This makes it possible to perform an LBT process that is suitable for small packets.

Also, a shorter symbol length that is shorter than the symbol length used in the current D2D (LTE) may be used (which is equivalent to increasing the subcarrier spacing) so that the carrier sense can be performed at shorter intervals while limiting the maximum TB size per transmission time interval (TTI). This makes it possible to perform an LBT process that is suitable for small packets.

In the descriptions below, a radio resource (symbol length) where the carrier sense is performed may be referred to as a "carrier sense period".

### [1-2. BACKOFF TIME]

In the LBT process according to the present embodiment, the user device UE may be configured to either start transmission of a D2D signal immediately after an idle state is detected by the carrier sense or start transmission of a D2D signal when an idle state is detected by the carrier sense continuously for a given time (backoff time). In the present embodiment, a backoff time may be defined as a time obtained by multiplying a counter value by a time interval (1 ms in the example of FIG. 8) at which the carrier sense is performed.

Also, the counter value may be autonomously determined by the user device UE itself; may be reported from the base station eNB via an RRC signal, broadcast information (SIB), or a layer 1/layer 2 control signal; or may be reported from an RSU.

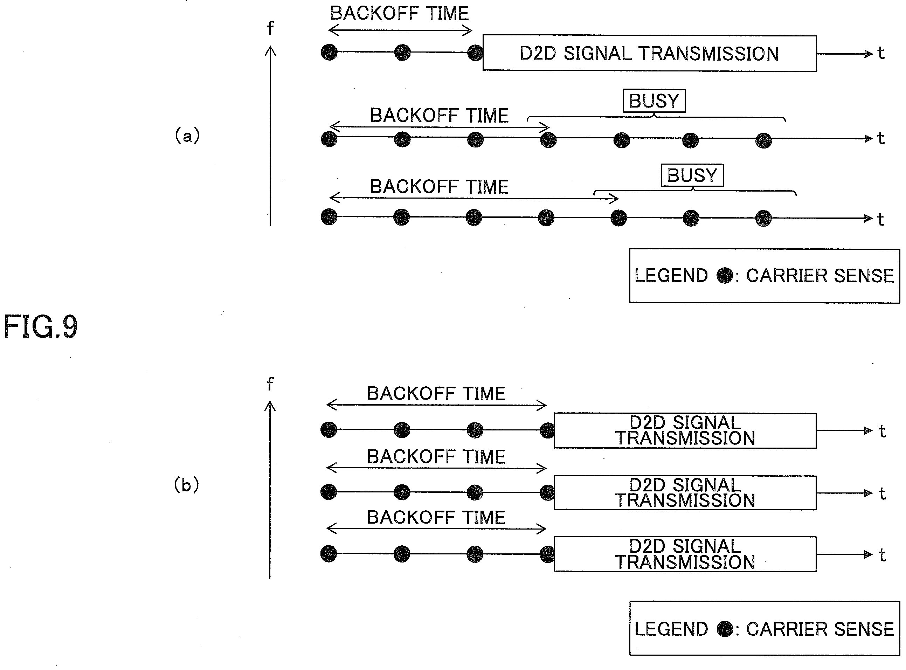

In the case where the counter value is reported from the base station eNB (or RSU) to user devices UE, the same backoff time may be used by the user devices UE. This makes it possible to improve the frequency use efficiency in a case where multiple user devices UE transmit D2D signals at the same time using different frequencies in a frequency carrier allocated for D2D communication. For example, as illustrated by FIG. 9 (a), when different backoff times are used by multiple user devices UE and one of the user devices UE using a short backoff time starts transmission of a D2D signal, other user devices UE detect a busy state and cannot start transmission of D2D signals. In this case, only one user device UE can start transmission of a D2D signal, and the frequency use efficiency is reduced. On the other hand, when the same backoff time is used by multiple user devices UE as illustrated by FIG. 9 (b), the user devices UE can start transmission of D2D signals at the same time. Thus, using the same backoff time makes it possible to improve the frequency use efficiency.

### [1-3. SUPPLEMENTAL INFORMATION ON LBT PROCESS]

When allocating radio resources for transmission of a D2D signal to the user device UE, the base station eNB (or RSU) of the present embodiment may report, to the user device UE, information indicating that a D2D signal can be transmitted without performing a carrier sense or indicating a time at which a D2D signal can be transmitted without performing a carrier sense. Also, the base station eNB (or RSU) may be configured to report the time via an RRC signal, broadcast information (SIB), or a layer 1/layer 2 control signal. The time may be represented by the number of TTIs (or subframes) or the number of times the carrier sense can be skipped. This configuration eliminates the need for the user device UE to perform a carrier sense every subframe and thereby makes it possible to reduce the processing load of the user device UE.

Also, the user device UE of the present embodiment may be configured to not apply the LBT process to a D2D signal that is transmitted periodically. Examples of periodically-transmitted D2D signals (physical channels) include a primary sidelink synchronization signal (PSSS) and a secondary sidelink synchronization signal (SSSS) that are mainly used to achieve synchronization between user devices UE that are located outside of the coverage of the base station eNB, and a physical sidelink broadcast control channel (PSBCH) that is mainly used to report system information to user devices UE located outside of the coverage of the base station eNB. This configuration makes it possible to prevent a risk that signals such as synchronization signals that are essential for D2D communication cannot be periodically transmitted as a result of the LBT process.

### (2. LBT PROCESS FOR EACH SUBBAND)

As described above, D2D presumes the use of FDM. More specifically, in D2D, it is possible to multiplex D2D communications of multiple user devices UE in the frequency domain in radio resources allocated for the D2D communications. Therefore, to perform the LBT process in an environment where D2D communications of multiple user devices UE are multiplexed in the frequency domain, the user device UE may be configured to perform a carrier sense for each of subbands obtained by dividing a frequency resource allocated for the D2D communications and thereby determine for each of the subframes whether a D2D signal can be transmitted.

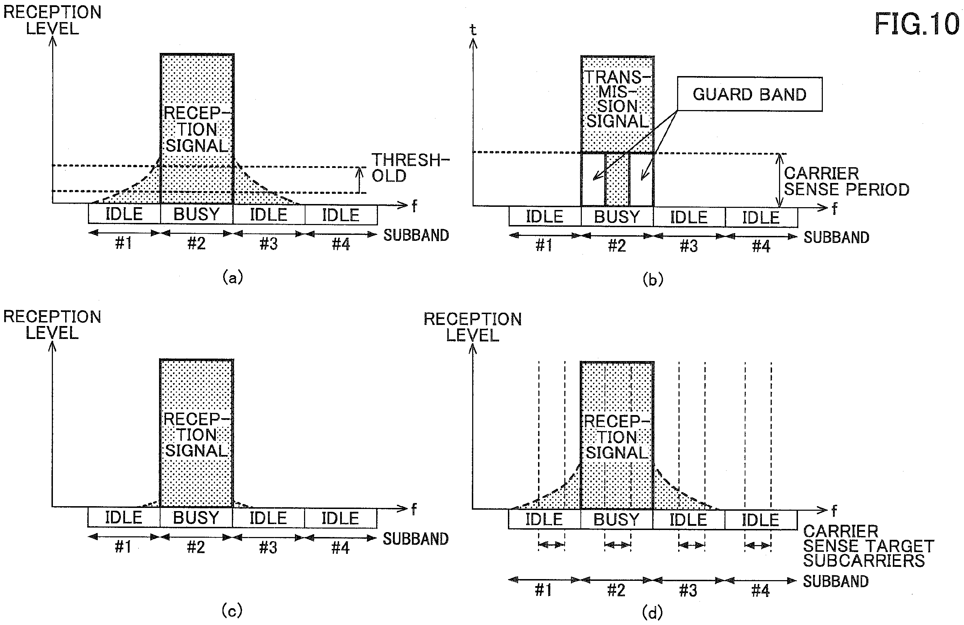

Also, the user device UE of the present embodiment may be configured to perform the LBT process such that the influence of in-band emission described above can be prevented. Details of LBT processes (1) through (4) are described below with reference to FIG. 10. The bandwidth of one subband is not limited to any specific value. However, it is assumed that each subband has a bandwidth in which only one user device UE can transmit a D2D signal, i.e., a bandwidth that can include at least one PRB (in the current D2D, 15 kHz x 12 subcarriers = 180 kHz). The bandwidth of one subband may be reported from the base station eNB to the user device UE via an RRC signal, broadcast information (SIB), or a layer 1/layer 2 control signal; or may be reported from an RSU to the user device UE.

### [2-1. LBT PROCESS FOR EACH SUBBAND (1)]

As described above, a carrier sense is performed by determining whether the reception level of a reception signal received during an LBT period in a frequency carrier to be used for transmission of a D2D signal is greater or lower than a predetermined threshold. As illustrated in FIG. 10 (a), the user device UE may be configured to perform a carrier sense by using a predetermined threshold that is set at a high value. In FIG. 10 (a), "RECEPTION SIGNAL" indicates a D2D signal transmitted from another user device UE. Setting the threshold at a high value makes it possible to reduce the possibility that false detections occur at subbands (#1 and #3) due to leak signals from the subband (#2) where the D2D signal is transmitted. The threshold set at a high value may be reported from the base station eNB via an RRC signal, broadcast information (SIB), or a layer 1/layer 2 control signal; or may be reported from an RSU.

### [2-2. LBT PROCESS FOR EACH SUBBAND (2)]

When a D2D signal is to be transmitted in a subband, the user device UE may be configured to set guard bands (where no D2D signal is transmitted) in the subband during a carrier sense period. The guard bands may be composed of one or more subcarriers or one or more resource blocks located at the sides of the subband. FIG. 10 (b) illustrates an example where guard bands are set in the carrier sense period. Setting the guard bands makes it possible to prevent the generation of leak signals from the subband (#2), which is used to transmit a D2D signal, to the subbands (#1 and #3), and thereby makes it possible to reduce false detections in the subbands (#1 and #3). The guard bands may be reported from the base station eNB via an RRC signal, broadcast information (SIB), or a layer 1/layer 2 control signal; or may be reported from an RSU.

### [2-3. LBT PROCESS FOR EACH SUBBAND (3)]

In the radio communication system of the present embodiment, one subband may be set at a bandwidth that can accommodate multiple PRBs (e.g., 8 PRBs). As illustrated by FIG. 10 (c), this method makes it possible to relatively reduce leak signals in the subbands (#1 and #3) other than the subband (#2) where a D2D signal is transmitted, and thereby makes it possible to reduce false detections in the subbands (#1 and #3).

### [2-4. LBT PROCESS FOR EACH SUBBAND (4)]

The user device UE may be configured to perform a carrier sense only in specific subcarriers located in the center of a target subband. For example, as illustrated in FIG. 10 (d), the user device UE measures the received power of only subcarriers located in the center of each of the subbands (#1 and #3). With this method, the received power of subcarriers near the subband (#2) used to transmit the D2D signal is not included in the measurement, and the received power measured by the user device UE is reduced. That is, this method makes it possible to reduce the received power measured in each of the subbands (#1 and #3) where no D2D signal is transmitted, and thereby makes it possible to reduce the possibility of false detections. Specific subcarriers used for the carrier sense may be reported from the base station eNB via an RRC signal, broadcast information (SIB), or a layer 1/layer 2 control signal; or may be reported from an RSU.

### (3. CARRIER SENSE TARGET RESOURCES)

In the processes described above, the user device UE performs a carrier sense in a transmission frequency carrier to be used for transmission of a D2D signal. However, a carrier sense may also be performed in a range wider than the transmission frequency carrier or a frequency carrier different from the transmission frequency carrier. As described above, in V2X, it is expected that interference control is necessary in a case where frequencies are shared with other operators and other radio communication systems. Particularly, when user devices UE perform D2D communication with each other outside of a coverage area (outside of an area of an operator to which the user devices UE belong), it is expected that interference occurs due to an overlap between the frequency carrier used for the D2D communication and frequency carriers being used by other operators and other radio communication systems.

For this reason, the user device UE may be configured to transmit a D2D signal after confirming that no radio signal is being transmitted by other operators and other radio communication systems. This configuration makes it possible to prevent interference with other operators and other radio communication systems. Here, radio resources (which include frequency carriers, measurement time, and measurement times) used to confirm that no radio signal is being transmitted by other operators and other radio communication systems are referred to as "carrier sense target resources".

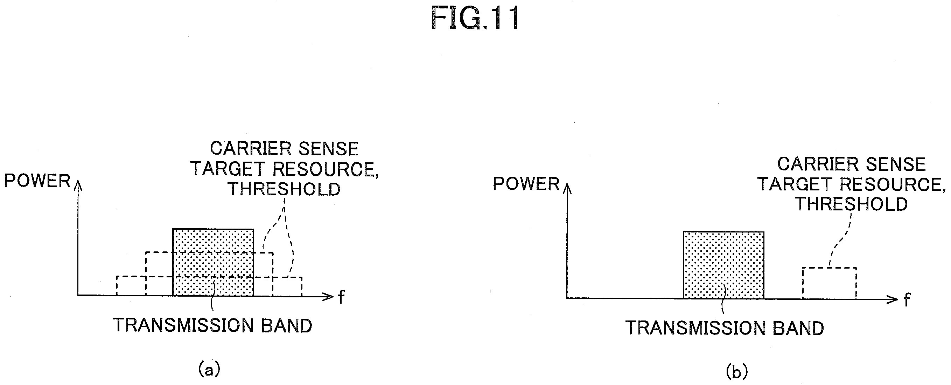

For example, as illustrated by FIG. 11 (a), the user device UE may be configured to perform a carrier sense for a frequency carrier ("carrier sense target resource" in FIG. 11 (a)) that is wider than a transmission frequency carrier to be used for transmission of a D2D signal. Also, as illustrated by FIG. 11 (b), the user device UE may be configured to perform a carrier sense for a frequency carrier ("carrier sense target resource" in FIG. 11 (b)) that is different from a transmission frequency carrier to be used for transmission of a D2D signal. The carrier sense target resources may be a specific resource pool in D2D communication or may be other radio resources. Also, the carrier sense in this case may be performed using a threshold that is different from the "predetermined threshold" described in the above processes (1. LBT PROCESS and 2. LBT PROCESS FOR EACH SUBBAND).

The carrier sense target resource may be reported from the base station eNB via an RRC signal, broadcast information (SIB), or a layer 1/layer 2 control signal; or may be reported from an RSU. The carrier sense target resource may also be preset in a subscriber identity module (SIM), or reported via an upper-layer control signal transmitted from a core network. Further, different carrier sense target resources may be set for different user devices UE or for different types (which are identified by UE Capability or upper layer identifiers) of user devices UE.

### (4. DETERMINING NECESSITY OF LBT PROCESS)

As described above, in V2X, it is necessary to reduce delay in important communications. Performing the LBT process for all communications may result in delay in important communications in an environment where many user devices UE perform communications, and is therefore not desirable.

For this reason, the user device UE may be configured to perform the LBT process (carrier sense) for prespecified frequency resources or time resources among frequency resources or time resources allocated for D2D communication, and to not perform the LBT process (carrier sense) for the remaining frequency resources or time resources.

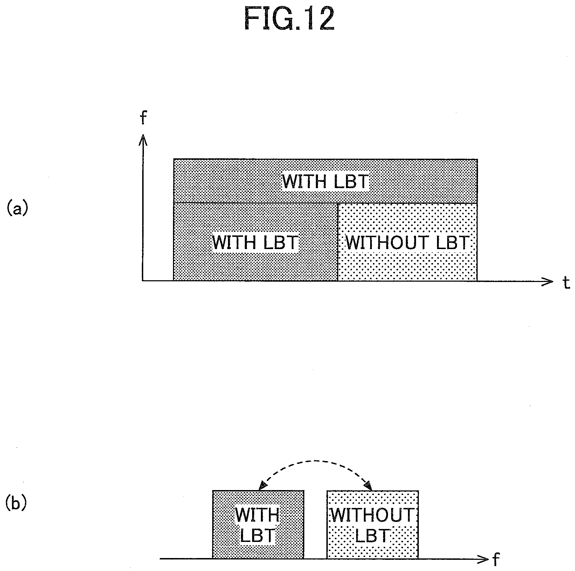

FIG. 12 is a drawing illustrating examples of radio resources for which the LBT process is performed and radio resources for which no LBT process is performed.

As illustrated by FIG. 12 (a), the user device UE may be configured to perform the LBT process (carrier sense) for a predetermined frequency resource, and to determine whether to perform the LBT process (carrier sense) for other frequency resources based on time resources.

Also, as illustrated in FIG. 12 (b), the user device UE may be configured to determine whether to perform the LBT process depending on frequency carriers.

Radio resources for which the LBT process is performed and radio resources for which no LBT process is performed may be reported from the base station eNB via an RRC signal, broadcast information (SIB), or a layer 1/layer 2 control signal; or may be reported from an RSU. Those radio resources may also be preset in a SIM, or reported via an upper-layer control signal transmitted from a core network.

Radio resources for which the LBT process is performed and radio resources for which no LBT process is performed may be changed depending on user devices UE or depending on types (which are identified by UE Capability or upper layer identifiers) of user devices UE. Also, only radio resources for which no LBT process is performed may be reported to particular user devices UE (e.g., RSUs), and only radio resources for which the LBT process is performed may be reported to other user devices UE. Further, radio resources for which no LBT process is performed and radio resources for which the LBT process is performed may overlap each other.

The base station eNB or the RSU may be configured to report, to a user device UE, a "non-LBT radio resource" for which no LBT process is performed together with information indicating a range (resource occupation range) within which the user device UE can occupy the "non-LBT radio resource". The resource occupation range may be indicated by, for example, a resource percentage, a time percentage, or a subframe (TTI) percentage. The user device UE transmits a D2D signal within the resource occupation range. For example, when the resource percentage is 50%, the user device UE transmits a D2D signal using only 50 or less percent of the non-LBT radio resource. As another example, when the time percentage is 50% and the non-LBT radio resource has a length of 10 subframes, the user device UE transmits a D2D signal using the non-LBT radio resource within 5 subframes. This method makes it possible to prevent the non-LBT radio resource from being occupied by a particular user device UE.

### (5. RESOURCE ALLOCATION FOR PHYSICAL CHANNELS)

### [5-1. ALLOCATION OF RADIO RESOURCES FOR PSCCH, PSSCH, AND PSDCH]

In D2D, radio resource allocation for PSCCH, PSSCH, and PSDCH employs repetition transmission for repeatedly transmitting the same signal, time hopping transmission, and frequency hopping transmission.

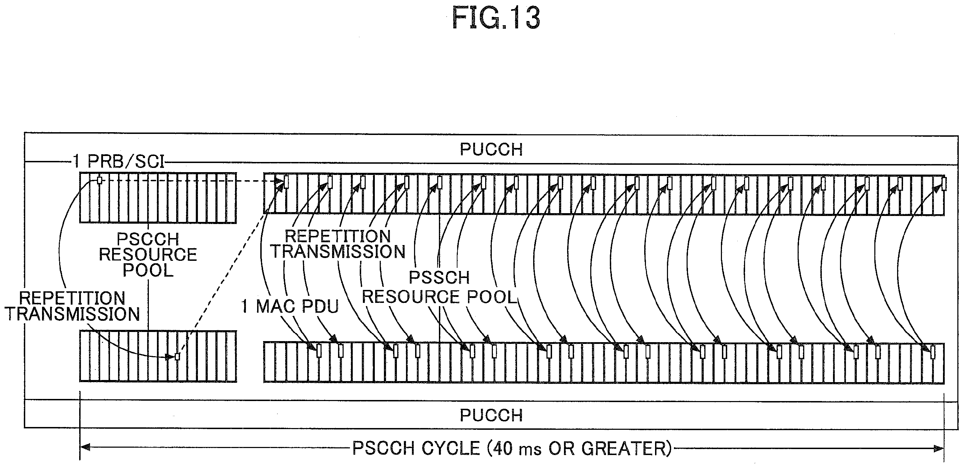

As an example, a method of allocating radio resources for PSCCH and PSSCH in the current D2D is described. As illustrated by FIG. 13, among all uplink resources, resource pools allocated for PSCCH and PSSCH are located inside of resources allocated for PUCCH. The resource pools of PSCCH and PSSCH are divided into upper parts and lower parts. Also, the resource pools of PSCCH and PSSCH are allocated periodically at an interval of 40 ms or greater in the time axis direction.

Here, for PSCCH, repetition transmission where the same SCI is repeatedly transmitted within the resource pool of the same PSCCH and time hopping transmission are employed. Similarly, for PSSCH, repetition transmission where the same MAC PDU is repeatedly transmitted within the resource pool of the same PSSCH, time hopping transmission, and frequency hopping transmission are employed.

In the present embodiment, the user device UE performs the LBT process when transmitting a D2D signal. If the LBT process is performed for each repetition transmission as in the current D2D, the overhead of transmission processing may increase. For this reason, in the radio communication system of the present embodiment, radio resources are allocated for PSCCH, PSSCH, and PSDCH according to methods that are different from methods employed in the current D2D.

For example, when repetition transmission is employed for PSCCH, PSSCH, and PSDCH, the user device UE or the base station eNB allocates radio resources without using at least one of frequency hopping and time hopping. Also, radio resources may be allocated without even using repetition transmission. The user device UE transmits a D2D signal using radio resources allocated by the base station eNB or radio resources allocated by the user device UE itself. The user device UE may perform frequency hopping such that allocated resources form a mirror image on the frequency axis in each subframe or by cyclically shifting the transmission frequency carrier by a constant amount.

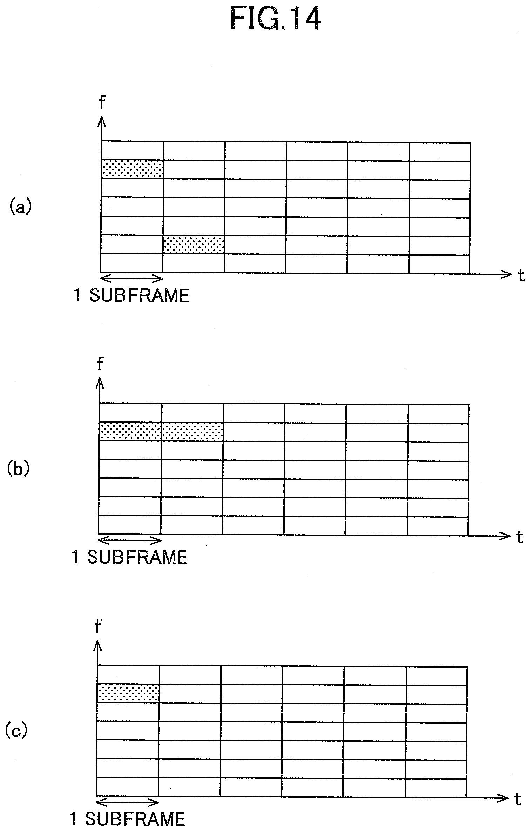

FIG. 14 is a drawing used to describe radio resource allocation methods that are adapted to take into account the LBT process. FIG. 14 (a) illustrates a radio resource allocation method where repetition transmission and frequency hopping are employed, but time hopping is not employed. FIG. 14 (b) illustrates a radio resource allocation method where only repetition transmission is employed, and frequency hopping and time hopping are not employed. FIG. 14 (c) illustrates a radio resource allocation method where repetition transmission is not employed.

Not employing time hopping while employing repetition transmission increases the chance that even if the LBT process is performed each time a MAC PDU is transmitted, MAC PDUs can be transmitted all together before another user device UE starts transmitting a radio signal, and thereby makes it possible to reduce the influence of delay. Also, not employing frequency hopping while employing repetition transmission increases the chance that MAC PDUs can be transmitted all together using a frequency carrier where no radio signal is being transmitted, and thereby makes it possible to reduce the influence of delay. Further, not employing repetition transmission makes it possible to prevent an increase in the transmission processing overhead caused by the LBT process.

Information indicating whether repetition transmission, time hopping transmission, and frequency hopping transmission are employed may be reported from the base station eNB via an RRC signal, broadcast information (SIB), or a layer 1/layer 2 control signal to the transmitting user device UEa and the receiving user device UEb, or may be reported from an RSU. This information may also be preset in a SIM, or reported via an upper-layer control signal transmitted from a core network. Also, the transmitting user device UEa may be configured to autonomously determine whether to employ repetition transmission, time hopping transmission, and frequency hopping transmission based on whether the LBT process is necessary.

Also, the receiving user device UEb may be configured to determine whether repetition transmission, time hopping transmission, and frequency hopping transmission are employed based on set values in an SCI format or the size of the SCI format.

### [5-2. MAC PDU TRANSMISSION METHOD]

In the current D2D, when repeatedly transmitting (repetition transmission) MAC PDUs via PSSCH, the user device UE consecutively transmits the same MAC PDU to reduce the influence of half-duplex communication. In the present embodiment, the transmission order of MAC PDUs may be changed to reduce the influence of half-duplex communication particularly in a case where small packets are transmitted and the LBT process is performed.

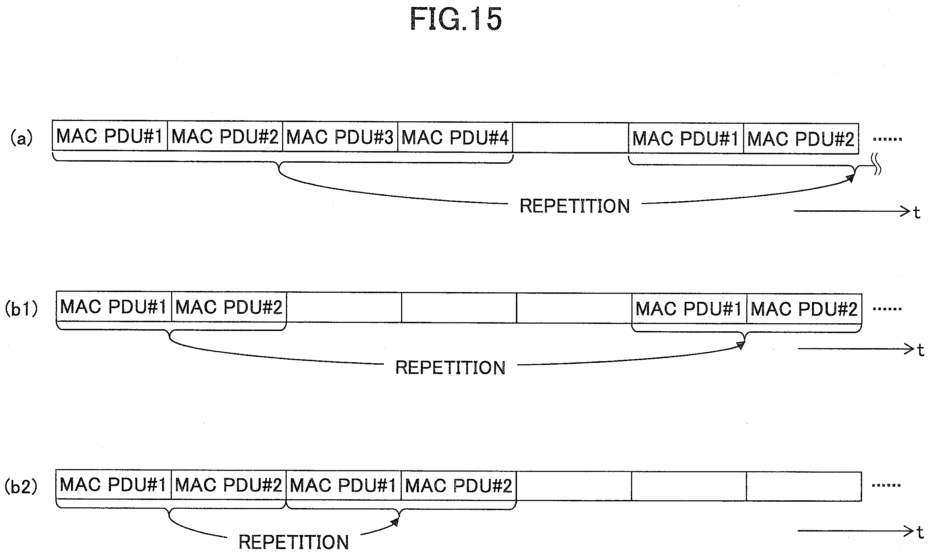

FIG. 15 is a drawing illustrating exemplary transmission orders of MAC PDUs. For example, the user device UE may be configured to transmit a predetermined number of MAC PDUs in sequence and after the transmission is completed, to repeat the transmission of those MAC PDUs. FIG. 15 (a) illustrates a case where the "predetermined number" is "4". In FIG. 15 (a), MAC PDUs #1 - #4 are transmitted consecutively, and then the transmission of MAC PDUs #1 - #4 is repeated. When the transmission of MAC PDUs #1 - #4 is repeated, the transmission order of MAC PDUs #1 - #4 may be changed. For example, it is possible to control the order of MAC PDUs while preventing the collision of the same MAC PDUs by including the index values of the MAC PDUs in, for example, the MAC header.

When the number of MAC PDUs to be actually transmitted is less than the "predetermined number", the user device UE may leave spare subframes unoccupied as non-transmission subframes and may transmit the next MAC PDUs after the non-transmission subframes as illustrated in FIG. 15 (b). In this case, it is preferable to include the index values of MAC PDUs in, for example, the MAC header so that the non-transmission subframes can be recognized. Also, as illustrated by FIG. 15 (c), the user device UE may repeat the transmission of MAC PDUs using the spare subframes.

With this method, in a case where small packets are transmitted, all MAC PDUs containing the small packets are quickly delivered to the receiving user device UE, and delay can be reduced.

The "predetermined number" may be reported from the base station eNB via an RRC signal, broadcast information (SIB), or a layer 1/layer 2 control signal to the transmitting user device UEa and the receiving user device UEb, or may be reported from an RSU. The "predetermined number" may also be preset in a SIM, or reported via an upper-layer control signal transmitted from a core network.

When indices indicating the order of MAC PDUs are attached to the MAC header, the receiving user device UEb may recognize the transmission order of MAC PDUs based on the indices. Also, the receiving user device UEb may be configured to recognize the order of MAC PDUs based on set values (e.g., hopping pattern) in the SCI format.

### <FUNCTIONAL CONFIGURATIONS>

Examples of functional configurations of the user device UE and the base station eNB that perform the above processes are described below.

### (USER DEVICE)

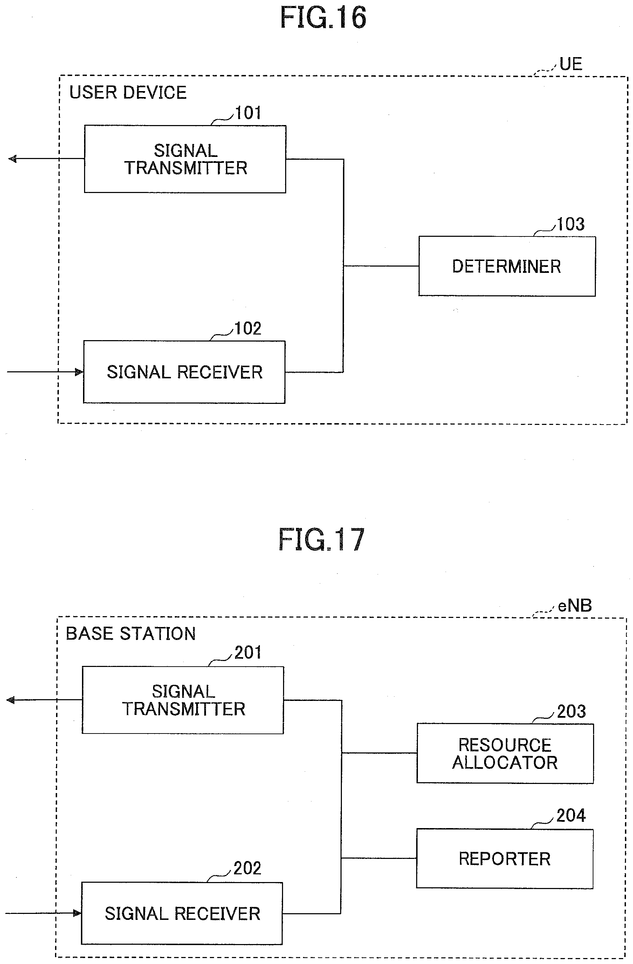

FIG. 16 is a drawing illustrating an example of a functional configuration of a user device according to an embodiment. As illustrated by FIG. 16, the user device UE includes a signal transmitter 101, a signal receiver 102, and a determiner 103. FIG. 16 illustrates only functional components of the user device UE that are particularly relevant to the present embodiment, and the user device UE may also at least include unshown functional components that are necessary for operations conforming to LTE. Also, the functional configuration of FIG. 16 is just an example. As long as operations related to the present embodiment can be performed, the categorization and the names of the functional components may be freely changed.

The signal transmitter 101 generates various physical layer signals from upper layer signals to be transmitted from the user device UE, and wirelessly transmits the physical layer signals. Also, the signal transmitter 101 includes a function to transmit a D2D signal and a transmission function for cellular communication. When it is determined that a D2D signal can be transmitted based on the result of a carrier sense performed by the determiner 103, the signal transmitter 101 transmits the D2D signal to the receiving user device UEb.

Also, when the determiner 103 determines that a subband is usable for transmission of a D2D signal, the signal transmitter 101 may transmit the D2D signal in the subband.

Also, when transmitting a D2D signal to the receiving user device UEb, the signal transmitter 101 may be configured to not transmit the D2D signal in subcarriers that are located at the sides of a subband and are set as guard bands in a symbol specified beforehand by the base station eNB (or RSU) or a core network.

Also, when transmitting a D2D signal using a frequency resource or a time resource that is determined by the determiner 103 to be usable for transmission of the D2D signal without performing a carrier sense, the signal transmitter 101 may be configured to transmit the D2D signal within a resource occupation range specified beforehand by the base station eNB (or RSU) or a core network.

Also, when repeatedly transmitting the same MAC PDU via a physical channel used for D2D communication, the signal transmitter 101 may transmit the MAC PDU without performing time hopping or frequency hopping. When transmitting multiple different MAC PDUs via a physical channel used for D2D communication, the signal transmitter 101 may sequentially transmit a predetermined number of MAC PDUs in the multiple different MAC PDUs based on information indicating the predetermined number reported from the base station eNB (or RSU) or a core network.

Also, when the determiner 103 determines that a D2D signal can be transmitted, the signal transmitter 101 may transmit the D2D signal to the receiving user device UEb at a timing after a backoff time.

The signal receiver 102 includes functions to wirelessly receive various signals from other user devices UE or the base station eNB, and obtain upper layer signals from the received physical layer signals. The signal receiver 102 also includes a function to receive a D2D signal and a reception function for cellular communication.

The determiner 103 includes a function to perform a carrier sense in a symbol that is in a physical channel used for D2D communication and specified beforehand by the base station eNB (or RSU) or a core network, and thereby determine whether a D2D signal can be transmitted.

Also, the determiner 103 may be configured to perform a carrier sense for each subband to determine whether it is possible to transmit a D2D signal in the subband. Also, the determiner 103 may be configured to perform a carrier sense in a specific subcarrier located in the center of a subband.

Also, the determiner 103 may be configured to determine whether a D2D signal can be transmitted by performing a carrier sense for frequency resources or time resources specified in advance by the base station eNB (or RSU) or a core network from among physical channels used for D2D communication and frequency resources or time resources allocated for D2D communication, and to determine that a D2D signal can be transmitted without performing a carrier sense for frequency resources or time resources other than the frequency resources or the time resources that are specified in advance.

Also, the determiner 103 may be configured to perform a carrier sense in a frequency carrier different from a frequency carrier to be used by the signal transmitter 101 for transmission of a D2D signal. Further, the determiner 103 may be configured to not perform a carrier sense for PSSS, SSSS, or PSBCH among physical channels used for D2D communication.

### (BASE STATION)

FIG. 17 is a drawing illustrating an example of a functional configuration of a base station according to an embodiment. As illustrated by FIG. 17, the base station eNB includes a signal transmitter 201, a signal receiver 202, a resource allocator 203, and a reporter 204. FIG. 17 illustrates only functional components of the base station eNB that are particularly relevant to the present embodiment, and the base station eNB may also at least include unshown functional components that are necessary for operations conforming to LTE. Also, the functional configuration of FIG. 17 is just an example. As long as operations related to the present embodiment can be performed, the categorization and the names of the functional components may be freely changed.

The signal transmitter 201 generates various physical layer signals from upper layer signals to be transmitted from the base station eNB, and wirelessly transmits the physical layer signals. The signal receiver 202 includes functions to wirelessly receive various signals from the user devices UE, and obtain upper layer signals from the received physical layer signals.

The resource allocator 203 sets, in an uplink signal, a resource pool of PSDCH or resource pools of PSCCH and PSSCH used for D2D communication, and reports the set resource pools via an RRC signal or system information to the user device UE. Also, the resource allocator 203 allocates resources to the resource pool of PSDCH or the resource pool of PSSCH in response to a request from the user device UE.

The reporter 204 reports, to the user device UE, various types of configuration information used by the user device UE to perform a carrier sense. The configuration information, for example, includes a carrier sense period, a counter value, a subband, various thresholds used for the carrier sense, guard bands, specific subcarriers for which the carrier sense is performed, a carrier sense target resource, radio resources for which the LBT process is performed, radio resources for which no LBT process is performed, a resource occupation range, information indicating whether repetition transmission is employed, and information indicating whether time hopping transmission and frequency hopping transmission are employed.

### <HARDWARE CONFIGURATION>

The block diagrams (FIGs. 16 and 17) used in the above embodiment illustrate functional blocks. Those functional blocks (components) may be implemented by hardware, software, or the combination of hardware and software. The functional blocks may be implemented by any appropriate means. That is, each functional block may be implemented by one apparatus that is physically and/or logically integrated, or by two or more physically and/or logically separated apparatuses that are directly and/or indirectly connected (via lines and/or wirelessly) to each other.

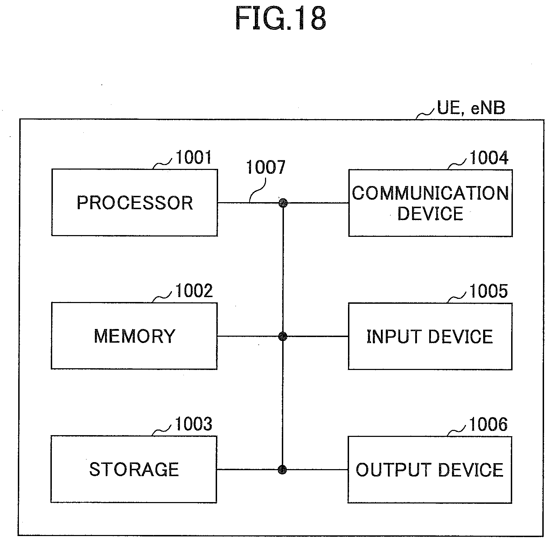

For example, the base station eNB and the user device UE of the present embodiment may be implemented by computers that perform signal transmission methods of the present invention. FIG. 18 is a drawing illustrating an example of a hardware configuration of each of a base station and a user device according to an embodiment. Physically, each of the base station eNB and the user device UE may be implemented by a computer including a processor 1001, a memory 1002, a storage 1003, a communication device 1004, an input device 1005, an output device 1006, and a bus 1007.

In the descriptions below, the term "device" may be replaced with, for example, "circuit", "module", or "unit". The hardware configuration of the base station eNB and the user device UE may include one or more components illustrated in FIG. 18 and may not necessarily include all of the components.

Functions of the base station eNB and the user device UE may be implemented by loading software (programs) into hardware components such as the processor 1001 and the memory 1002, executing the loaded software by the processor 1001, and thereby controlling communications performed by the communication device 1004 and data read/write operations of the memory 1002 and the storage 1003.

The processor 1001, for example, runs an operating system to control the entire computer. The processor 1001 may be implemented by a central processing unit (CPU) that includes interfaces with peripheral devices, a controller, an arithmetic unit, and registers. For example, the signal transmitter 101, the signal receiver 102, and the determiner 103 of the user device UE and the signal transmitter 201, the signal receiver 202, the resource allocator 203, and the reporter 204 of the base station eNB may be implemented by the processor 1001.

The processor 1001 loads programs (program code), software modules, and data from the storage 1003 and/or the communication device 1004 into the memory 1002, and performs various processes according to the loaded programs, software modules, and data. The programs cause the computer to perform at least a part of the processes described in the above embodiments. For example, the signal transmitter 101, the signal receiver 102, and the determiner 103 of the user device UE and the signal transmitter 201, the signal receiver 202, the resource allocator 203, and the reporter 204 of the base station eNB may be implemented by control programs loaded into the memory 1002 and executed by the processor 1001. Other functional blocks may also be implemented in a similar manner. The processes described above may be performed by one processor 1001 or may be performed concurrently or sequentially by two or more processors 1001. The processor 1001 may be implemented by one or more chips. The programs may be received from a network via a telecommunication line.

The memory 1002 is a computer-readable storage medium and may be implemented by, for example, at least one of a read-only memory (ROM), an erasable programmable ROM (EPROM), an electrically-erasable programmable ROM (EEPROM), and a random access memory (RAM). The memory 1002 may also be referred to as a register, a cache, or a main memory. The memory 1002 can store programs (program code) and software modules that are executable to perform signal transmission methods of the present embodiment.

The storage 1003 is a computer-readable storage medium and may be implemented by, for example, at least one of an optical disk such as a compact-disk ROM (CD-ROM), a hard disk drive, a flexible disk, a magneto-optical disk (e.g., a compact disk, a digital versatile disk, or a Blu-ray (registered trademark) disc), a smart card, a flash memory (e.g., a card drive, a stick drive, or a key drive), a floppy (registered trademark) disk, and a magnetic strip. The storage 1003 may also be referred to as a secondary storage. The storage medium described above may also be implemented by any other appropriate medium such as a database or a server that includes the memory 1002 and/or the storage 1003.

The communication device 1004 is a hardware component (transceiver device) for communicating with other computers via a wired network and/or a wireless network. The communication device 1004 may also be referred to as a network device, a network controller, a network card, or a communication module. For example, the signal transmitter 101 and the signal receiver 102 of the user device UE and the signal transmitter 201 and the signal receiver 202 of the base station eNB may be implemented by the communication device 1004.

The input device 1005 receives external inputs and may be implemented by, for example, one or more of a keyboard, a mouse, a microphone, switches, buttons, and sensors. The output device 1006 is an external output device (e.g., a display, a speaker, and/or an LED lamp). The input device 1005 and the output device 1006 may be implemented as a single component (e.g., a touch panel).

The above-described devices including the processor 1001 and the memory 1002 are connected to each other via a bus 1007 for communication. The bus 1007 may be implemented by a single bus, or may be implemented by multiple buses connecting the corresponding devices.

Each of the base station eNB and the user device UE may include hardware components such as a microprocessor, a digital signal processor (DSP), an application specific integrated circuit (ASIC), a programmable logic device (PLD), and/or a field programmable gate array (FPGA), and some or all of the functional blocks may be implemented by these hardware components. For example, the processor 1001 may be implemented by at least one of these hardware components.

### <SUMMARY>

The above-described embodiment provides a user device for a radio communication system supporting D2D communication. The user device includes a determiner that performs a carrier sense in a prespecified symbol in a physical channel used for the D2D communication to determine whether a D2D signal can be transmitted, and a transmitter that transmits the D2D signal to another user device different from the user device when the determiner determines that the D2D signal can be transmitted. This user device UE provides a technology that enables LBT in D2D communication.

The determiner may be configured to perform the carrier sense for each subband obtained by dividing a frequency resource allocated for the D2D communication and thereby determine whether the D2D signal can be transmitted in the subband, and the transmitter may be configured to transmit the D2D signal in the subband when the determiner determines that the D2D signal can be transmitted in the subband. This configuration makes it possible to perform the LBT process while multiplexing D2D communications of multiple user devices UE in the frequency domain.

Also, the determiner may be configured to perform the carrier sense in a specific subcarrier located in the center of the subband. This configuration makes it possible to reduce received power measured in subbands where no D2D signal is transmitted, and thereby makes it possible to reduce the possibility of false detections.

When transmitting the D2D signal to the other user device, the transmitter may not transmit the D2D signal in subcarriers that are located at sides of the subband and set as guard bands in the prespecified symbol. This configuration makes it possible to prevent generation of leak signals in subbands that are adjacent to a subband where the D2D signal is transmitted, and thereby makes it possible to reduce false detections in the adjacent subbands where no D2D signal is being transmitted.

The determiner may be configured to determine whether the D2D signal can be transmitted by performing the carrier sense for a prespecified frequency resource or a prespecified time resource among frequency resources or time resources allocated for the D2D communication, and to determine that the D2D signal can be transmitted without performing the carrier sense for a frequency resource or a time resource other than the prespecified frequency resource or the prespecified time resource. For example, this configuration makes it possible to not perform the LBT process for radio resources used for important communications and to reduce delay in the important communications.

When transmitting the D2D signal using the frequency resource or the time resource that is determined by the determiner to be usable for transmission of the D2D signal without performing the carrier sense, the transmitter may transmit the D2D signal within a prespecified resource occupation range. This configuration makes it possible to prevent a radio resource for which no LBT process is performed from being occupied by a particular user device UE.

The determiner may be configured to perform the carrier sense in a frequency carrier different from a frequency carrier to be used by the transmitter for transmission of the D2D signal. This configuration makes it possible to prevent interference with other operators and other radio communication systems when a frequency carrier is shared with the other operators and the other radio communication systems.

When repeatedly transmitting the same MAC PDU via the physical channel used for the D2D communication, the transmitter may transmit the MAC PDU without performing time hopping or frequency hopping. Even if the LBT process is performed each time a MAC PDU is transmitted, this configuration increases the chance that MAC PDUs can be transmitted all together before another user device UE starts transmitting a radio signal or increases the chance that MAC PDUs can be transmitted all together by using a frequency carrier where no radio signal is being transmitted, and thereby makes it possible to reduce the influence of delay.

When transmitting multiple different MAC PDUs via the physical channel used for the D2D communication, the transmitter may sequentially transmit a predetermined number of MAC PDUs among the multiple different MAC PDUs. Particularly in a case where small packets are transmitted, this configuration makes it possible to reduce the influence of half-duplex communication that is a characteristic of the D2D communication. That is, in a case where small packets are transmitted, all MAC PDUs containing the small packets are quickly delivered to the receiving user device UE, and delay can be reduced.

The above-described embodiment also provides a signal transmission method performed by a user device for a radio communication system supporting D2D communication. The method includes performing a carrier sense in a prespecified symbol in a physical channel used for the D2D communication to determine whether a D2D signal can be transmitted, and transmitting the D2D signal to another user device different from the user device when it is determined that the D2D signal can be transmitted. This signal transmission method provides a technology that enables LBT in D2D communication.

### <SUPPLEMENTARY DESCRIPTION OF EMBODIMENTS>

Configuration information used by the user device UE to perform a carrier sense may be implicitly reported (e.g., by sending no information).

A D2D signal, an RRC signal, and a control signal may be a D2D message, an RRC message, and a control message, respectively.

The order of steps described in each method claim is an example, and the steps may be performed in any other order unless otherwise mentioned.

The embodiments of the present invention may be applied to LTE, LTE-A, CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-Wideband), Bluetooth (registered trademark), and/or any other appropriate system.

Components of each apparatus (the user device UE, the base station eNB) described in the above embodiments may be implemented by executing a program stored in a memory by a CPU (processor) of the apparatus, may be implemented by hardware such as hardware circuits including logic for the above-described processes, or may be implemented by a combination of programs and hardware.

Embodiments of the present invention are described above. However, the present invention is not limited to the above-described embodiments, and a person skilled in the art may understand that variations, modifications, and replacements may be made to the above embodiments. Although specific values are used in the above descriptions to facilitate the understanding of the present invention, the values are just examples and other appropriate values may also be used unless otherwise mentioned. Grouping of subject matter in the above descriptions is not essential for the present invention. For example, subject matter described in two or more sections may be combined as necessary, and subject matter described in one section may be applied to subject matter described in another section unless they contradict each other. Boundaries of functional units or processing units in functional block diagrams do not necessarily correspond to boundaries of physical components. Operations of multiple functional units may be performed by one physical component, and an operation of one functional unit may be performed by multiple physical components. The order of steps in sequence charts and flowcharts described in the embodiments may be changed unless they do not become inconsistent. Although a functional block diagram is used to describe the user device UE and the base station eNB, the user device UE and the base station eNB may be implemented by hardware, software, or a combination of them. Software to be executed by a processor of the user device UE and software to be executed by a processor of the base station eNB according to the embodiments of the present invention may be stored in any appropriate storage medium such as a random access memory (RAM), a flash memory, a read-only memory (ROM), an EPROM, an EEPROM, a register, a hard disk drive (HDD), a removable disk, a CD-ROM, a database, or a server.

The present application is based on and claims the benefit of priority of Japanese Patent Application No. 2015-159991 filed on August 13, 2015, the entire contents of which are hereby incorporated herein by reference.

### EXPLANATION OF REFERENCE NUMERALS

- UE: User device
- eNB: Base station
- 101: Signal transmitter
- 102: Signal receiver
- 103: Determiner
- 201: Signal transmitter
- 202: Signal receiver
- 203: Resource allocator
- 204: Reporter
- 1001: Processor
- 1002: Memory
- 1003: Storage
- 1004: Communication device
- 1005: Input device
- 1006: Output device

## Claims

1. A user device for a radio communication system supporting D2D communication, the user device comprising:
a determiner that performs a carrier sense in a prespecified symbol in a physical channel used for the D2D communication to determine whether a D2D signal can be transmitted; and
a transmitter that transmits the D2D signal to another user device different from the user device when the determiner determines that the D2D signal can be transmitted.

2. The user device as claimed in claim 1, wherein
the determiner performs the carrier sense for each subband obtained by dividing a frequency resource allocated for the D2D communication and thereby determines whether the D2D signal can be transmitted in the subband; and
the transmitter transmits the D2D signal in the subband when the determiner determines that the D2D signal can be transmitted in the subband.

3. The user device as claimed in claim 2, wherein the determiner performs the carrier sense in a specific subcarrier located in a center of the subband.

4. The user device as claimed in claim 2 or 3, wherein when transmitting the D2D signal to the another user device, the transmitter does not transmit the D2D signal in subcarriers that are located at sides of the subband and set as guard bands in the prespecified symbol.

5. The user device as claimed in any one of claims 1 through 4, wherein
the determiner
determines whether the D2D signal can be transmitted by performing the carrier sense for a prespecified frequency resource or a prespecified time resource among frequency resources or time resources allocated for the D2D communication, and
determines that the D2D signal can be transmitted without performing the carrier sense for a frequency resource or a time resource other than the prespecified frequency resource or the prespecified time resource.

6. The user device as claimed in claim 5, wherein when transmitting the D2D signal using the frequency resource or the time resource that is determined by the determiner to be usable for transmission of the D2D signal without performing the carrier sense, the transmitter transmits the D2D signal within a prespecified resource occupation range.

7. The user device as claimed in any one of claims 1 through 6, wherein the determiner performs the carrier sense in a frequency carrier that is different from a frequency carrier used by the transmitter to transmit the D2D signal.

8. The user device as claimed in any one of claims 1 through 7, wherein when repeatedly transmitting a same MAC PDU via the physical channel used for the D2D communication, the transmitter transmits the MAC PDU without performing time hopping or frequency hopping.

9. The user device as claimed in claim 8, wherein when transmitting multiple different MAC PDUs via the physical channel used for the D2D communication, the transmitter sequentially transmits a predetermined number of MAC PDUs among the multiple different MAC PDUs.

10. A signal transmission method performed by a user device for a radio communication system supporting D2D communication, the method comprising:
performing a carrier sense in a prespecified symbol in a physical channel used for the D2D communication to determine whether a D2D signal can be transmitted; and
transmitting the D2D signal to another user device different from the user device when it is determined that the D2D signal can be transmitted.
